(19) Europäisches Patentamt / European Patent Office / Office européen des brevets

(11) **EP 1 779 686 B1**

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(21) Anmeldenummer: **05772753.9**

(22) Anmeldetag: **18.08.2005**

(51) Int Cl.:
***H04W 16/18*** *(2009.01)*

(86) Internationale Anmeldenummer:
**PCT/EP2005/008939**

(87) Internationale Veröffentlichungsnummer:
**WO 2006/018300 (23.02.2006 Gazette 2006/08)**

(54) **VERFAHREN ZUR DIMENSIONIERUNG VON HARDWAREKOMPONENTEN FÜR BASISSTATIONEN VON CDMA-KOMMUNIKATIONSNETZEN**

METHOD FOR DIMENSIONING HARDWARE COMPONENTS FOR BASE STATIONS OF CDMA COMMUNICATION NETWORKS

PROCEDE POUR LE DIMENSIONNEMENT DE COMPOSANTS MATERIELS POUR DES STATIONS DE BASE DE RESEAUX DE COMMUNICATION AMRC

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.08.2004 DE 102004040294**

(43) Veröffentlichungstag der Anmeldung:
**02.05.2007 Patentblatt 2007/18**

(73) Patentinhaber: **T-Mobile Deutschland GmbH 53227 Bonn (DE)**

(72) Erfinder: **SCHRÖDER, Bernd 26135 Oldenburg (DE)**

(74) Vertreter: **Riebling, Peter Patentanwalt Postfach 31 60 88113 Lindau (DE)**

(56) Entgegenhaltungen:
**US-A1- 2004 068 556**

- **HOLMA H ET AL: "Uplink admission control and soft capacity with MUD in CDMA" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, Bd. 1, 19. September 1999 (1999-09-19), Seiten 431-435, XP010352848 ISBN: 0-7803-5435-4**
- **SALKOLA M I: "CDMA capacity - can you supersize that?" WIRELESS COMMUNICATIONS AND NETWORKING CONFERENCE, 2002. WCNC2002. 2002 IEEE, PISCATAWAY, NJ, USA, IEEE, Bd. 2, 17. März 2002 (2002-03-17), Seiten 768-773, XP010585692 ISBN: 0-7803-7376-6**

EP 1 779 686 B1

**Beschreibung**

Die Erfindung betrifft ein Verfahren zur Dimensionierung von verbindungs- und trägerorientierter Hardware für die Luftschnittstelle von CDMA-Kommunikationsnetzen, insbesondere unter Berücksichtigung der Soft-Kapazität und der simultanen Existenz verschiedener Trägerdienste.

Bisherige Verfahren waren in der Lage entweder verbindungsorientierte Hardware zu dimensionieren, zum Beispiel basierend auf Erlang B oder ähnlichen Produktformlösungen, oder auch trägerorientierte Hardware für die simultane Existenz mehrerer Trägerdienste auf Basis der multidimensionalen Erlang-Formel oder ähnlichen Produktformlösungen, jedoch nicht beide Fragestellungen simultan. Die Erlang-B-Verlustformel wird in Kommunikationssystemen angewendet, um die Anzahl notwendiger Kanäle für Sprachverbindungen abzuschätzen. Die drei Variablen sind das Angebot (typischerweise in der Hauptverkehrsstunde) in der Einheit Erlang, die maximale Blockierwahrscheinlichkeit und die Anzahl der Kanäle: Die Aktivität ausgedrückt in der Pseudoeinheit Erlang berechnet sich aus dem Verhältnis der Zeit, zu welcher ein Kanal tatsächlich benutzt wurde dividiert durch die Zeit, zu der er insgesamt zur Verfügung gestanden hätte. Die Blockierwahrscheinlichkeit gibt die Wahrscheinlichkeit an, mit der ein Ruf aufgrund belegter Kanäle nicht aufgebaut werden konnte und daher abgewiesen werden musste( es tritt also Verlust auf). Ein Wert von 0,05 bedeutet also 5 abgewiesene (blockierte) Rufe bei 100 Rufaufbauversuchen. Die Anzahl der Kanäle ist die Anzahl verfügbarer Verkehrskanäle.

Ein Verfahren der oben beschriebenen Art ist in der Veröffentlichung US 2004 / 068956 A1 beschrieben. Diese Schritt betrifft Verfahren zur Dimensionierung von paketbasierten Funknetzen, wobei eine Anzahl von Benutzern bzw. eine Anzahl von benötigten Verkehrskanäle der Basisstationen zum Erreichen eines bestimmten Verkehrsdurchsatzes bestimmt wird. Hierbei wird stets nur eine Art von Kanälen bzw. Hardwarekomponenten dimensioniert, niemals zwei verschiedene Arten gleichzeitig. Ferner wird stets nur auf einen Zieldurchsatz (target throughput) für eine bestimmte Anzahl von Kanälen dimensioniert.

Die Aufgabe der Erfindung besteht darin, eine Verfahren zur simultanen Dimensionierung von sogenannten Channel-Elementen und Modems in einer Basisstation (Node-B) eines CDMA-Netzes unter Berücksichtigung der Netzauslastung und unter Einhaltung vorgegebener Blockierwahrscheinlichkeiten anzugeben.

Weitere Ziele der Erfindung sind Untersuchungen zur Kapazität der Luftschnittstelle bei vorgegebener Hardware-Ausstattung einer Basisstation und vorgegebenem Benutzerverhalten (Hard-Capacity), Untersuchungen zum Einfluss von Geschwindigkeiten auf die Performance von Verbindungen zwischen BS und Nutzern, und Entwicklung und Validierung von Verfahren zur Bestimmung der Versorgungswahrscheinlichkeiten im Uplink unter Berücksichtigung pixelindividueller Verkehrverteilungen.

Die gestellte Aufgabe wird erfindungsgemäß durch die Merkmale des Patentanspruchs 1 gelöst.

Vorteilhafte Ausgestaltungen und bevorzugte Merkmale des erfindungsgemäßen Verfahrens sind in den abhängigen Ansprüchen definiert.

Die wesentliche Erweiterung des erfindungsgemäßen Verfahrens gegenüber den bisher bekannten Verfahren liegt in der Einbeziehung der "Soft"-Kapazitat, das heißt, einer begrenzten Netzkapazität unter Berücksichtigung von netzeigenen Interferenzen.

Nachfolgend wird ein Ausführungsbeispiel des erfindungsgemäßen Dimensionierungsverfahrens erläutert. Das Verfahren wird vorzugsweise in Form eines Softwareprogramms auf einem Personal Computer implementiert und ausgeführt.

Definitionen

Die Eingabeparameter zur Anwendung des Verfahrens zur Dimensionierung der Hardware-Komponenten einer Basisstation bestehen aus einer Menge von Diensten und einer Menge von Sektoren, für die jeweils bestimmte Parameter spezifiziert werden müssen. Zudem werden Kosten $K_M$ und $K_C$ für ein Modempaar bzw. ein Channel Element festgelegt.

Die Menge der Dienste wird mit $S$ bezeichnet und jeder Dienst $S$ wird durch die folgenden Größen gekenn-zeichnet:

- $S.E\,[\omega^k]$, $k = 1$, 2:Momente des Uplink-Dienstlastfaktors
- $S.\,VAR\,[\omega\,]$:       Varianz des Uplink-Dienstlastfaktors
- $S.E\,[\gamma^k]$, $k = 1, 2$ :Momente des Downlink-Dienstlastfaktors
- $S.\,\nu_{up}$:       Uplink Aktivitätsfaktor (mittlere Aktivität)
- $S.\,\nu_{down}$:       Downlink Aktivitätsfaktor (mittlere Aktivität)
- $S.C$:       benötigte CEs (Up- und Downlink zusammen)
- $S.M = 2$:       benötigte Modems (Up- und Downlink zusammen)
- $S.B^*$:       vorgegebene Blockierwahrscheinlichkeit

(fortgesetzt)

| | | |
|---|---|---|
| • $S.\theta$: | | Faktor, der angibt, um wie viel die reine "Soft"-Blockier-wahrscheinlichkeit höchstens überschritten werden darf |

Die Menge der Sektoren an der betrachteten Basisstation wird mit Z bezeichnet. Für jeden Sektor $Z \in Z$ werden die folgenden Parameter spezifiziert:

| | |
|---|---|
| • $Z.a_S$: | Verkehrsintensität von Dienst $S$ [Erl] |
| • $Z.\eta_{th}$: | Blockierschwelle für den Uplink (Lastfaktor) |
| • $Z.T_{th}$: | Blockierschwelle für den Downlink (Basisstationsleistung) |
| • $Z.E[\Gamma]$: | Mittelwert der Fremdzelllast |
| • $Z.VAR[\Gamma]$ | Varianz der Fremdzelllast |
| • $Z.E\ k = 1, 2$: | Momente des Positionslastfaktors [mW$^k$] |
| • $Z.E[Q_{S1},Q_{S2}]$, | Erwartungswert des Produkts zweier Positionslastfaktoren [mW$^2$] |
| • $Z.\hat{T}_{const}$: | konstante Basisstationsleistung [mW] |

Das erfindungsgemäße Verfahren beruht darauf, dass für jede Basisstation die minimale Anzahl von Hardware-Komponenten ermittelt wird, bei der die vorgegebenen Blockierwahrscheinlichkeiten eingehalten werden. Sollte dieses Ziel aufgrund der beschränkten "Soft"-Kapazität nicht erreichbar sein, werden die Hardware-Komponenten so dimensioniert, dass die "Soft"-Blockierwahrscheinlichkeit, d.h. bei uneingeschränkten Hardware-Ressourcen, höchstens um einen vorgegebenen Faktor erhöht wird.

Sei $B_{Z,S}[M,C]$ die gemeinsame "Soft"- und "Hard"- Blockierwahrscheinlichkeit für Dienst $S$ in Sektor $Z$, falls die Basisstation mit $M$ Modempaaren und $C$ Channel Elementen bestückt ist. Dann kann die Hardwaredimensionierung als Optimierungsproblem formuliert werden:

**Zielfunktion:**

$$min \{ M\ K_M + C\ K_C \}$$

**Nebenbedingungen:**

$$\forall Z \in Z, S \in S : B_{Z,S}[M,C] \leq \max\{S.B^*, B_{Z,S}^{soft} \cdot S.\theta\}$$

Die Bezeichnung $B_{Z,S}^{soft}$ steht hier für die reine "Soft"-Blockierwahrscheinlichkeit ohne Blockierung durch Hardware-Einschränkungen. Zusätzlich zu den Eingabeparametern, die das Problem beschreiben, werden noch einige Parameter benötigt, die den Ablauf des Algorithmus steuern. Diese dienen speziell dazu, den Trade-Off zwischen Genauigkeit und Laufzeit des Algorithmus einzustellen.

- $\xi_{hard}$: Parameter, ab dem angenommen wird, dass an einer Basisstation kein Hard-Blocking mehr auftritt. Falls also die reine Hardware-Blockierung unter $\xi_{hard}$ liegt, entspricht dies unendlicher Hardware und die Blockierwahrscheinlichkeiten hängen nur noch von der Soft-Kapazität der Sektoren ab. $\xi_{hard}$ sollte auf jeden Fall deutlich kleiner als die kleinste Zielblockierwahrscheinlichkeit gewählt werden.

- $\xi_{soft}$: Parameter, ab dem angenommen wird, dass ein Dienst in einem Zustand als vollständig soft-blockiert gilt. $\xi_{soft}$ sollte also fast 1 sein und Werte im Bereich [0.99; 1] annehmen. Verwendung in der Funktion ***isSoftBlocked.***

Dimensionierungsverfahren

Das Verfahren zur Dimensionierung der Hardware-Komponenten an einer Basisstation besteht aus mehreren Teilschritten.

Zunächst werden die Modems und Channel-Elemente getrennt voneinander dimensioniert, da darüber eine feste untere Schranke für die Anzahl der benötigten Hardware-Komponenten vorgegeben ist. Danach wird für diese initiale Konfiguration, $C_{min}$ und $M_{min}$ die Berechnung der Blockierwahrscheinlichkeiten durchgeführt. Dabei werden Modems und Channel Elemente gemeinsam betrachtet und Soft Blocking auf dem Up- und Downlink miteinbezogen.

Sind die vorgegebenen Blockierwahrscheinlichkeiten jetzt für alle Sektoren erfüllt, so ist die Dimensionierung abgeschlossen. Andernfalls muss unterschieden werden, ob die Soft Kapazität bereits für alle Sektoren erreicht ist. In diesem Fall werden die Hardware-Komponenten soweit reduziert, dass die Blockierwahrscheinlichkeiten höchsten um einen Wert θ über den reinen Soft Blockierwahrscheintichkeiten liegen. Andernfalls wird die Zahl der Hardware-Komponenten weiter erhöht. Dazu wird die Zahl der Modems bei konstanten $C_{min}$ Channel Elementen so weit erhöht, bis keine Blockierung durch Modems mehr auftritt. Ebenso wird die Zahl der Channel Elemente bei $M_{min}$ Modems erhöht. Diese Erhöhung der Modems und Channel Elemente wird solange durchgeführt, bis entweder die gewünschten Blockierwahrscheinlichkeiten erreicht sind oder aber durch zusätzliche Hardware keine Reduzierung der Blockierwahrscheinlichkeiten mehr erreicht wird, da die Soft-Kapazität in den entsprechenden Sektoren erreicht ist. Die daraus resultierenden $C_{max}$ und $M_{max}$ stellen eine Obergrenze für die benötigten Modems dar. Die Blockierwahrscheinlichkeiten für alle Konfigurationen mit weniger als $M_{max}$ bzw. $C_{max}$ werden bestimmt und unter allen Konfigurationen, die die vorgegebenen Blockierwahrscheinlichkeiten einhalten, wird diejenige mit den geringsten Kosten ausgewählt.

Im folgenden wird der Dimensionierungsalgorithmus in Pseudo-Code 10 beschrieben und in einem Flussdiagramm dargestellt:

```
function (M,C)=DimHardware(Z,S)
```

Mindestanzahl Modems: $M_{min} = DimPureModem(\mathcal{Z}, \mathcal{S})$

Mindestanzahl Channel Elemente: $C_{min} = DimPureChannelElement(\mathcal{Z}, \mathcal{S})$

Zustandsraum: $\mathcal{X} = StateSpace(0, 0, 0, M_{min}, C_{min}, \mathcal{S}, \mathcal{Z})$

if $isBlockProbOk(\mathcal{X}, M_{min}, C_{min}, \mathcal{Z}, \mathcal{S})$

$\qquad M = M_{min}, C = C_{min}$

else

$\qquad M_{max} = M_{min}, C_{max} = C_{min}$

while $isAdditionalHardwareRequired(\mathcal{X}, M_{max}, C_{max}, \mathcal{Z}, \mathcal{S})$

$\qquad M_{min} = M_{max}, C_{min} = C_{max}$

Maximale Anzahl Modems:

$$M_{max} = DimModem(\mathcal{X}, M_{min}, C_{min}, \mathcal{S}, \mathcal{Z})$$

Maximale Anzahl Channel Elemente:

$$C_{max} = DimChannelElement(\mathcal{X}, M_{min}, C_{min}, \mathcal{S}, \mathcal{Z})$$

Zustandsraum:

$$\mathcal{X} = StateSpace(\mathcal{X}, M_{min}, C_{min}, M_{max}, C_{max}, \mathcal{S}, \mathcal{Z})$$

end

Blockierwahrscheinlichkeiten:

$$\{\mathcal{B}_{Z,S}\} = BlockProbAll(\mathcal{X}, M_{max}, C_{max}, \mathcal{S}, \mathcal{Z})$$

$$(M, C) = DimModemChannelElement(\mathcal{B}_{Z,S}, M, C, \mathcal{Z}, \mathcal{S})$$

$\quad$ end

```
end
```

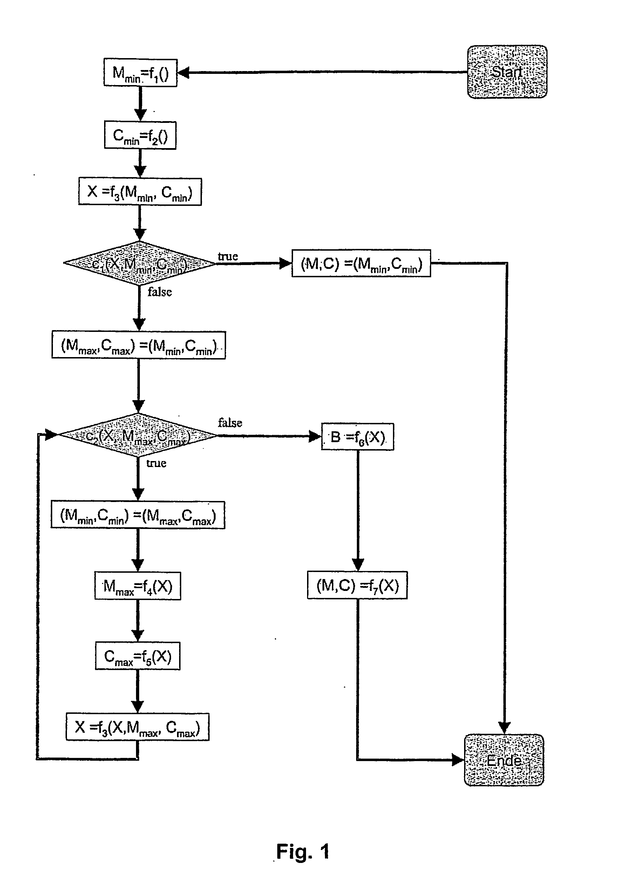

Figur 1 zeigt ein entsprechendes Flussdiagramm zum oben angegeben Dimensionierungsalgorithmus, wobei die folgenden Funktionen verwndet wurden:

*f*1 (**DimPureModem**): Dimensioniert die Anzahl der Modems ohne Einschränkung durch Channel Elemente oder Soft-Kapazität.

*f*2 (**DimPureChanneiElement**): Dimensioniert die Anzahl der Channel Elemente ohne Einschränkung durch Modems oder Soft-Kapazität.

*f*3 (**StateSpace**): Berechnet den Zustandsraum, insbesondere Zustandswahrscheinlichkeiten und "lokale" Blockierwahrscheinlichkeiten für eine vorgegebene Anzahl von Modems und Channel Elementen.

*f*4 (**DimModem**): Erhöht die Anzahl der Modems bei einer vorgegebenen Anzahl von Channel Elementen bis entweder die geforderten Blockierwahrscheinlichkeiten erreicht sind oder aber keine Blockierung durch Modems mehr auftritt.

*f*5 (**DimChanneiElement**): Erhöht die Anzahl der Channel Elemente bei einer vorgegebenen Anzahl von Modems bis entweder die geforderten Blockierwahrscheinlichkeiten erreicht sind oder aber keine Blockierung durch Channel Elemente mehr auftritt.

*f*6 (**BlockProbAll**): Berechnet für einen bereits berechneten Zustandsraum mit M Modems und C Channel Elementen die Blockierwahrscheinlichkeiten für alle Hardware-Konfigurationen mit höchstens M Modems und höchstens C Channel Elementen.

*f*7 (**DimModemChannelEiement**): Bestimmt für jeden Dienst in jedem Sektor, ob nach der vorgegebenen Blok-

kierwahrscheinlichkeit dimensioniert wird oder ob die Soft-Kapazität dafür nicht ausreicht. Bestimmt für eine vorgegebene maximale Hardware-Konfiguration die Hardware-Konfiguration mit den minimalen Kosten, die die vorgegebenen Blockierwahrscheinlichkeiten bzw. Soft-Blockierwahrscheinlichkeiten einhält.

Es gelten die Bedingungen:

$c1$ (**isBlockProbOk**): Bestimmt für einen Zustandsraum, ob die vorgegebenen Blockierwahrscheinlichkeiten eingehalten werden.

$c2$ (**isAdditionalHardwareRequired**): Bestimmt für einen Zustandsraum, ob zusätzliche Hardware benötigt wird.

Die verwendeten Funktionen werden nun im einzelnen erläutert:

Die Funktion *isBlockProbOk* prüft, ob für einen Zustandsraum $X$ mit $M$ Modem-Paaren und C Channel-Elementen die vorgegebenen Blockierwahrscheinlichkeiten für alle Dienste und Sektoren eingehalten werden:

```
function isBlockProbOk(X, M, C, Z, S)
    forall Z ∈ 𝒵
        forall S ∈ 𝒮
            B_{Z,S} = BlockProb(X, M, C, Z, S)
            if B_{Z,S} > S.B°
                return false
            end
        end
    end
    return true
end
```

Die Funktion *isAdditionalHardwareRequired* prüft, ob noch zusätzliche Hardware, d.h. Modems oder Channel Elemente, benötigt werden. Zusätzliche Hardware wird benötigt, falls es mindestens einen Sektor gibt, in dem die vorgegebenen Blockierwahrscheinlichkeiten für mindestens einen Dienst noch nicht eingehalten werden gleichzeitig aber auch die Soft-Kapazität dieses Sektors noch nicht vollständig erschöpft ist:

```
function isAdditionalHardwareRequired(X, M, C, Z, S)
        forall Z ∈ Z
            forall S ∈ S
                B_{Z,S} = BlockProb(X, M, C, Z, S)
                if B_{Z,S} > S.B* ∧ not isSoftBlocked(X, M, C, Z, S)
                    return true
                end
            end
        end
        return false
end
```

Reine Modem-Dimensionierung

Die Mindestanzahl $M_{min}$ von Modems wird bestimmt, indem die Systemkapazität zunächst nur durch die Anzahl der Modems bestimmt wird. Diese Anzahl ist nur dann überdimensioniert, falls die Soft-Kapazität nicht ausreicht, um der Verkehrsanforderung zu genügen. Die reine Modemdimensionierung wird direkt über die Erlang B-Formel durchgeführt. Im folgenden wird die Funktion **DimPureModem** in Pseudo-Code beschrieben:

```
function M = DimPureModem(Z, S)
        Gesamtverkehrsintensität: a = ∑     ∑  Z.a_S
                                       Z∈Z  S∈S
        Anzahl Modem-Paare: M = 0
        Wahrscheinlichkeit des Blockierzustandes: P=1
        Normalisierungskonstante: N=1
        Blockierwahrscheinlichkeit B = 1
        while B > max(S.B*)
                  S∈S
            M = M + 1
            P = P · a/M
            N = N + P
            B = P/N
        end
        \\ Hinweis: Modems werden nur paarweise (Up- und Downlink) betrachtet.
end
```

Reine Channel Element-Dimensionierung

Die Mindestanzahl $C_{min}$ von Channel Elementen wird bestimmt, indem die Systemkapazität zunächst nur durch die Anzahl der Channel Elemente bestimmt wird. Diese Anzahl ist nur dann überdimensioniert, falls die Soft-Kapazität nicht ausreicht, um der Verkehrsanforderung zu genügen. Die reine Channel Element-Dimensionierung wird rekursiv durchgeführt. Im folgenden wird die Funktion **DimPureChannelElement** in Pseudo-Code beschrieben:

$$
\begin{aligned}
&\textbf{function } C = DimPureChannelElement(\mathcal{Z}, \mathcal{S}) \\
&\qquad \text{Verkehrsintensität pro Dienst über alle Sektoren: } a_S = \sum_{Z \in \mathcal{Z}} Z.a_S \\
&\qquad \text{Anzahl Channel Elemente: } C = 0 \\
&\qquad \text{Zustandswahrscheinlichkeit: } P[0] = 1 \\
&\qquad \text{Blockierwahrscheinlichkeit für Dienst S: } B_S = 1 \\
&\qquad \textbf{while } \exists S \in \mathcal{S} : B_S > S.B' \\
&\qquad\qquad C = C + 1 \\
&\qquad\qquad P[C] = \sum_{S \in \mathcal{S} | S.C \leq C} P[C - S.C] \cdot a_S \frac{S.C}{C} \\
&\qquad\qquad P = \frac{P}{1 + P[C]} \\
&\qquad\qquad \backslash\backslash \ P \text{ ist hier ein Vektor} \\
&\qquad\qquad B_S = \sum_{c = \max\{0, C - S.C + 1\}}^{C} P[c] \\
&\qquad \textbf{end} \\
&\textbf{end}
\end{aligned}
$$

### Berechnung der Zustandswahrscheinlichkeiten und Soft-Blockierwahrscheinlichkeiten für einen Zustandsraum

In diesem Abschnitt wird der Algorithmus zur Bestimmung der Zustands- und Soft-Blockierwahrscheinlichkeiten unter Berücksichtigung von Soft- und Hard-Kapazität beschrieben. Die Zahl der Hardware-Komponenten ist mit M Modempaaren (Up- und Downlink) und C Channel Elementen festgelegt. Der Algorithmus beruht auf einer rekursiven Berechnung der Zustandswahrscheinlichkeiten, wobei ein Zustand durch die Anzahl der belegten Modems und Channel Elemente beschrieben wird. Der Algorithmus beinhaltet den Fall, dass bereits ein kleinerer Zustandsraum berechnet wurde, auf dessen Zustandsbeschreibung rekursiv zurückgegriffen werden kann.

Der Zustandsraum wird mit $X$ bezeichnet, der Zustand mit $M$ belegten Modems und $C$ belegten Channel Elementen als $X[M, C]$. Die Notation $X[M, C]$ bezeichnet den Teilraum mit allen Zuständen, in denen höchstens $M$ Modems und höchstens $C$ Channel Elemente belegt sind. Für jeden Zustand $X$ werden rekursiv die folgenden Größen bestimmt:

- $X.P_S$:      Wahrscheinlichkeit, den Zustand durch Übergang mit Dienst $S$ zu erreichen
- $X.P$:      Zustandswahrscheinlichkeit
- $X.E\,[N_{Z,S}]$:      Mittlere Anzahl Teilnehmer von Dienst S in Sektor $Z$
- $X.p_{Z,S}$:      Wahrscheinlichkeit, dass ein Teilnehmer in Sektor $Z$ Dienst $S$ hat
- $X.E\,[\eta_Z]$:      Mittelwert der Uplink-Last für Sektor $Z$
- $X.\,VAR\,[\eta_Z]$:      Varianz der Uplink-Last für Sektor $Z$
- $X.E\,k = 1, 2$:      1. und 2. Moment der Basisstationsleistung zu den Teilnehmern in Sektor $Z$
- $X.E\,[\psi_Z]$:      Mittelwert der Downlink-Last in Sektor $Z$
- $X.\beta_{Z,S}$:      Soft-Blockierwahrscheinlichkeit in Sektor $Z$ für Dienst $S$

Im folgenden wird vorausgesetzt, dass für den Teilraum $X[M_{init}, C_{init}]$ die Zustände $X$ mit obigen Größen schon bestimmt sind. Die Summe der Zustandswahrscheinlichkeiten des Teilraumes muss offensichtlich 1 ergeben. Für $M_{init} = C_{init} = 0$, d.h. wenn kein Teilraum vorgegeben ist, wird der minimale Teilraum $X[0, 0]$ wie folgt initialisiert:

```
function 𝒳 = initStateSpace(𝒵, 𝒮)
        X[0,0].P = 1
        X[0,0].E[η_Z] = 0
        X[0,0].VAR[η_Z] = 0
        X[0,0].E[T̂_Z] = 0
        X[0,0].E[T̂_Z²] = 0
        X[0,0].E[ψ_Z] = 0
        forall Z ∈ 𝒵
            forall S ∈ 𝒮
                X[0,0].E[N_{Z,S}] = 0
                X[0,0].p_{Z,S} = 0
            end
        end
        forall Z ∈ 𝒵
            forall S ∈ 𝒮
                X[0,0].β_{Z,S} = SoftBlockProb(X[0,0], Z, S, 𝒮)
            end
        end
end
```

Ausgehend von diesem initialen Zustandsraum mit $M_{init}$ Modems und $C_{init}$ Channel Elementen wird der Zustandsraum X[$M$, $C$] nach der Funktion **StateSpace** bestimmt.

```
function (X, [NormConst]) = StateSpace(X, M_init, C_init, M, C, S, Z)
        NormConst = 1
        if M_init = C_init = 0
                X = initStateSpace(Z, S)
        end
        for m=M_init + 1 to M
                for c=0 to C_init
                        X[m, c] = State(m, c, X[m − 1, c − 1], Z, S)
                        \\ X[m, c] = ∅, falls m < 0 oder c < 0
                        NormConst = NormConst + X[m, c].P
                end
        end
        for m=0 to M
                for c=C_init + 1 to C
                        X[m, c] = State(m, c, X[m − 1, c − 1], Z, S)
                        \\ X[m, c] = ∅, falls m < 0 oder c < 0
                        NormConst = NormConst + X[m, c].P
                end
        end
        X[M, C].P = X[M,C].P / NormConst
                \\ X[M, C].P bezeichnet die M × C-Matrix mit den Zustandswahrscheinlichkeiten
end
```

Benutzte Funktionen

Die Funktion **State** bestimmt die Zustandswahrscheinlichkeiten, die Systemgrößen und die Blockierwahrscheinlichkeiten für den Zustand mit $m$ Modem-Paaren und c Channel Elementen. Dabei wird vorausgesetzt, dass die Zustände mit weniger Modem-Paaren oder Channel Elementen schon bekannt sind. Der Algorithmus setzt voraus, dass die Zustände den lokalen Gleichgewichtsgleichungen (*local balance equations*) genügen, die Zustandswahrscheinlichkeiten also relativ zu den Wahrscheinlichkeiten der schon bestimmten Zustände bestimmt werden können. Bei diesem Algorithmus handelt es sich um eine Approximation, da bei den lokalen Gleichgewichtsgleichungen aufgrund der lokalen Blockierwahrscheinlichkeiten kleine Abweichungen auftreten.

```
function X = State(M, C, X, Z, S)
        \\ Zustandswahrscheinlichkeiten
        forall S ∈ S
            if isReachable(M − 1, C − S.C, S)
```
$$X[M,C].P_S = X[M-1, C-S.C].P \cdot \left( \sum_Z (1 - X[M-1, C-S.C].\beta_{Z,S}) \cdot Z.a_S \right) \frac{S.C}{C}$$
```
            else
```
$$X[M,C].P_S = 0$$
```
            end
        end
```
$$X[M,C].P = \sum_{S \in S} X[M,C].P_S$$
```
        forall S ∈ S
```
$$X[M,C].P_S = \frac{X[M,C].P_S}{X[M,C].P}$$
```
        end
        forall Z ∈ Z
            forall S ∈ S
```
$$X[M,C].E[N_{Z,S}] = UserNumber(X[M,C], X, M, C, Z, S, S)$$
```
            end
            forall S ∈ S
                if X[M,C].E[N_{Z,S}] > 0
```
$$X[M,C].p_{Z,S} = \frac{X[M,C].E[N_{Z,S}]}{\sum_{S' \in S} X[M,C].E[N_{Z,S'}]}$$
```
                else
```
$$X[M,C].p_{Z,S} = 0$$
```
                end
            end
```
$$(X[M,C].E[\eta_Z], X[M,C].VAR[\eta_Z]) = UplinkLoad(X[M,C], X, M, C, Z, S)$$
$$(X[M,C].E[\dot{T}_Z], X[M,C].E[\dot{T}_Z^2]) = BTS\text{-}Tx\text{-}Power(X[M,C], X, M, C, Z, S)$$
$$X[M,C].E[\psi_Z] = DownlinkLoad(X[M,C], X, M, C, Z, S)$$
```
            forall S ∈ S
```
$$X[M,C].\beta_{Z,S} = SoftBlockProb(X[M,C], Z, S, S)$$
```
            end
        end
end
```

Die Funktion *isReachable* prüft, ob ein Zustand überhaupt erreichbar ist. Zustände sind nur dann erreichbar, wenn pro Modem-Paar mindestens die minimale Anzahl Channel-Elemente belegt ist, höchstens aber die maximale Anzahl. Die minimale und maximale Anzahl von Channel Elementen ergeben sich aus dem Dienst mit der kleinsten bzw. größten Channel Element Anforderung.

```
function isReachable(M, C, S)
    if M < 0
        return false
    else
        if M · min{S.C} ≤ C ≤ M · max{S.C}
              S∈S                   S∈S
            return true
        else
            return false
        end
    end
end
```

Die Funktion **SoftBlockProb** bestimmt die lokale Blockierwahrscheinlichkeit im Zustand $X$ für Dienst $S$ im Sektor Z. Das ist die Wahrscheinlichkeit, mit der ein Teilnehmer, der sich in Sektor Z befindet und mit Dienst $S$ kommunizieren will, abgewiesen wird, falls sich das System gerade in Zustand $X$ befindet.

$$\text{function } \beta = SoftBlockProb(X, Z, S, S)$$
$$\beta = 1 - (1 - SoftBlockProbUp(X, Z, S))(1 - SoftBlockProbDown(X, Z, S, S))$$
$$\text{end}$$

Die Funktion **SoftBlockProbUp** bestimmt die Wahrscheinlichkeit, mit der ein Teilnehmer mit Dienst $S$ in Sektor $Z$ blockiert wird, weil die Uplink-Kapazität erschöpft ist.

$$\text{function } \beta = SoftBlockProbUp(X, Z, S)$$
$$E[\eta_{all}] = X.E[\eta_Z] + S.E[\omega] + Z.E[\Gamma]$$
$$VAR[\eta_{all}] = X.VAR[\eta_Z] + S.VAR[\omega] + Z.VAR[\Gamma]$$
$$(\mu, \sigma) = Mom2ParLN(E[\eta_{all}], VAR[\eta_{all}])$$
$$\beta = 1 - LN_{\mu,\sigma}(Z.\eta_{th})$$
$$\text{end}$$

Die Funktion **SoftBlockProbDown** bestimmt die Wahrscheinlichkeit, mit der ein Teilnehmer mit Dienst $S$ in Sektor $Z$ blockiert wird, weil die Downlink-Kapazität erschöpft ist.

$$\text{function } \beta = SoftBlockProbDown(X, Z, S, \mathcal{S})$$

$$E\left[\hat{T}_{all}\right] = X.E\left[\hat{T}_Z\right] + S.E\left[\gamma\right] \cdot Z.E\left[Q_S\right]$$

$$E\left[\hat{T}_{all}^2\right] = X.E\left[\hat{T}_Z^2\right]$$
$$+2 \cdot X.E\left[\psi_Z\right] \cdot S.E\left[\gamma\right] \cdot \sum_{S' \in \mathcal{S}} X.p_{Z,S'} \cdot Z.E\left[Q_{S'}Q_S\right]$$
$$+S.E\left[\gamma^2\right] \cdot Z.E\left[Q_S^2\right]$$

$$VAR\left[\hat{T}_{all}\right] = E\left[\hat{T}_{all}^2\right] - E\left[\hat{T}_{all}\right]^2$$

$$(\mu, \sigma) = Mom2ParLN(E\left[\hat{T}_{all}\right], VAR\left[\hat{T}_{all}\right])$$

$$\beta = 1 - LN_{\mu,\sigma}(Z.\hat{T}_{th} - Z.\hat{T}_{const})$$

$$\text{end}$$

Die Funktion **UserNumber** berechnet rekursiv, wie viele Nutzer von einem Dienst sich im Mittel in einem Zustand im System befinden.

$$\text{function } E[N] = UserNumber(Y, X, M, C, Z, S, \mathcal{S})$$
$$E[N] = 0$$
$$\text{forall } S' \in \mathcal{S} \backslash S$$
$$\text{if } M > 0 \wedge C \geq S'.C$$
$$\text{if } S' \neq S$$
$$E[N] = E[N] + Y.P_{S'} \cdot X[M-1, C-S'.C].E[N_{Z,S}]$$
$$\text{else}$$
$$E[N] = E[N] + Y.P_{S'} \cdot (X[M-1, C-S'.C].E[N_{Z,S}] + 1)$$
$$\text{end}$$
$$\text{end}$$
$$\text{end}$$
$$\text{end}$$

Die Funktion **UplinkLoad** bestimmt den Mittelwert und die Varianz der Last, die in Sektor $Z$ im Zustand $X$ anliegt.

$$\text{function } (E[\eta], VAR[\eta]) = UplinkLoad(Y, X, M, C, Z, S)$$
$$E[\eta] = 0$$
$$E[\eta^2] = 0$$
$$\text{forall } S \in S$$
$$\quad \text{if } M > 0 \wedge C \geq S.C$$
$$\quad\quad E[\eta] = E[\eta] + Y.P_S \cdot (X[M-1, C-S.C].E[\eta_Z] + S.\nu_{up} \cdot S.E[\omega])$$
$$\quad\quad E[\eta^2] = E[\eta^2] + Y.P_S \cdot \Big( X[M-1, C-S.C].E[\eta_Z^2]$$
$$\quad\quad\quad\quad + 2 \cdot X[M-1, C-S.C].E[\eta_Z] \cdot S.\nu_{up} \cdot S.E[\omega]$$
$$\quad\quad\quad\quad + S.\nu_{up} \cdot S.E[\omega^2] \Big)$$
$$\quad\quad \text{end}$$
$$\quad \text{end}$$
$$VAR[\eta] = E[\eta^2] - E[\eta]^2$$
$$\text{end}$$

Die Funktion **DownlinkLoad** bestimmt den Mittelwert der Last, die in Sektor $Z$ im Zustand $X$ anliegt.

$$\text{function } E[\psi] = DownlinkLoad(Y, X, M, C, Z, S)$$
$$E[\psi] = 0$$
$$\text{forall } S \in S$$
$$\quad \text{if } M > 0 \wedge C \geq S.C$$
$$\quad\quad E[\psi] = E[\psi] + Y.P_S \cdot (X[M-1, C-S.C].E[\psi_Z] + S.\nu_{down} \cdot S.E[\gamma])$$
$$\quad \text{end}$$
$$\quad \text{end}$$
$$\text{end}$$

Die Funktion **BTS-Tx-Power** bestimmt das erste und zweite Moment der Basisstationsleistung in Sektor $Z$, falls sich das System im Zustand $X$ befindet.

$$\text{function } (E\left[\dot{T}\right], E\left[T^2\right]) = BTS\text{-}Tx\text{-}Power(Y, \mathcal{X}, M, C, Z, \mathcal{S})$$

$$E\left[\dot{T}\right] = 0$$

$$E\left[T^2\right] = 0$$

for all $S \in \mathcal{S}$

  if $M > 0 \wedge C \geq S.C$

$$E\left[\dot{T}\right] = E\left[\dot{T}\right] + Y.P_S \cdot \left(X[M-1, C-S.C].E\left[\dot{T}_Z\right] + S.\nu_{down} \cdot S.E\left[\gamma\right] \cdot Z.E[Q_S]\right)$$

$$E\left[T^2\right] = E\left[\hat{T}^2\right] + Y.P_{S'}$$

$$\left(X[M-1, C-S.C].E\left[\hat{T}_Z^2\right]\right.$$

$$+ 2 \cdot X[M-1, C-S.C].E\left[\hat{\psi}_Z\right] \cdot S.\nu_{down} \cdot S.E\left[\gamma\right] \cdot \sum_{S' \in \mathcal{S}} X[M, C].p_{Z,S'} \cdot Z.E[Q_{S'}Q_S]$$

$$\left. + S.\nu_{down} \cdot S.E\left[\gamma^2\right] \cdot Z.E\left[Q_S^2\right]\right)$$

  end

end

end

---

Bestimmung von Soft/Hard-Blockierwahrscheinlichkeiten für Modems und Channel Elemente

Die Funktion **BlockProb** bestimmt die Blockierwahrscheinlichkeiten für alle Dienste in allen Sektoren für eine vorgegebene Anzahl von *M* Modem-Paaren und C Channel Elementen. Die Blockierwahrscheinlichkeiten enthalten Soft- und Hard-Blocking.

$$\text{function } B_{Z,S} = BlockProb(\mathcal{X}, M, C, Z, S)$$

$$B_{Z,S} = \sum_{m=0}^{M-1} \left( \sum_{c=0}^{C-S.C} X[m,c].P \cdot X[m,c].\beta_{Z,S} + \sum_{c=\max\{0, C-S.C+1\}}^{C} X[m,c].P \right) + \sum_{c=0}^{C} X[M,c].P$$

end

Die **Funktion*HardBlockProb*** bestimmt die Hard-Blockierwahrscheinlichkeiten für alle Dienste für eine vorgegebene Anzahl von*M* Modem-Paaren und *C* Channel Elementen.

$$\text{function } B = HardBlockProb(\mathcal{X}, M, C, C_{max})$$

$$B = \sum_{m=0}^{M-1} \left( \sum_{c=\max\{0, C-C_{max}+1\}}^{C} X[m,c].P \right) + \sum_{c=0}^{C} X[M,c].P$$

end

Die Funktion *isSoftBlocked* prüft, ob es einen erreichbaren Zustand gibt, in dem Hard-Blocking für Dienst *S* auftritt, gleichzeitig aber die Soft-Kapazität des Sektors noch ausreicht, um einen Nutzer von Dienst *S* mit einer bestimmten Wahrscheinlichkeit anzunehmen.

```
function isSoftBlocked(X, M, C, Z, S)
        for m=0 to M
                if X[m, C − S.C + 1].P > 0 ∧ X[m, C].β_{Z,S} < ξ_{soft}
                        return false
                end
        end
        for c=0 to C-S.C
                if X[M, c].P > 0 ∧ X[M, c].β_{Z,S} < ξ_{soft}
                        return false
                end
        end
        return true
end
```

Dimensionierung der Modems bei gegebenen Channel Elementen

In diesem Abschnitt wird die Funktion *DimModem* beschrieben: Diese bestimmt die Anzahl der Modems, für die bei einer vorgegebenen Anzahl von Channel Elementen entweder die Ziel-Blockierwahrscheinlichkeiten aller Dienste eingehalten werden oder eine weitere Erhöhung der Zahl der Modems zu keiner Reduzierung der Blockierwahrscheinlichkeiten mehr führt. Die Berechnung der Blockierwahrscheinlichkeiten wird jeweils rekursiv, aufbauend auf den schon berechneten Blockierwahrscheinlichkeiten durchgeführt. Die Funktion *DimModem* sieht wie folgt aus, wobei $X$ der schon berechnete Zustandsraum ist:

$$\text{function } M = DimModem(\mathcal{X}, M, C, \mathcal{S}, \mathcal{Z})$$

$$\text{Soft-Blockierwahrscheinlichkeiten: } B_{Z,S}^{Soft}[M,C] = \sum_{m=0}^{M-1} \sum_{c=0}^{C-S.C} X[m,c].P \cdot X[m,c].\beta_{Z,S}$$

$$\text{Channel Element Blockierwahrscheinlichkeit: } B_S^C[M,C] = \sum_{c=\max\{0,C-S.C+1\}}^{C} \sum_{m=0}^{M-1} X[m,c].P$$

$$\text{Modem Blockierwahrscheinlichkeit: } B^M[M,C] = \sum_{c=0}^{C} X[M,c].P$$

$$\text{Gesamtblockierwahrscheinlichkeit: } B_{Z,S}[M,C] = B_{Z,S}^{Soft}[M,C] + B_S^C[M,C] + B^M[M,C]$$

$$\text{while } \exists Z.S : B_{Z,S}[M,C] \geq S.B^* \wedge B^M[M,C] > \xi_{hard}$$

$$M = M+1$$

$$\{\mathcal{X}[M,C], NormConst\} = StateSpace(\mathcal{X}[M-1,C], M-1, C, M, C, \mathcal{S}, \mathcal{Z})$$

$$B^M[M,C] = \sum_{c=0}^{C} X[M,c].P$$

$$\text{forall } S \in \mathcal{S}$$

$$B_S^C[M,C] = \frac{B_S^C[M-1,C]}{NormConst} + \sum_{c=\max\{C-S_s.C+1\}}^{C} X[M-1,c].P$$

$$\text{forall } Z \in \mathcal{Z}$$

$$B_{Z,S}^{Soft}[M,C] = \frac{B_{Z,S}^{Soft}[M-1,C]}{NormConst} + \sum_{c=0}^{C-S.C} X[M-1,c].P \cdot X[M-1,c].\beta_{Z,S}$$

$$B_{Z,S}[M,C] = B_{Z,S}^{Soft}[M,C] + B_S^C[M,C] + B^M[M,C]$$

$$\text{end}$$

$$\text{end}$$

$$\text{end}$$

$$\text{end}$$

## Dimensionierung der Channel Elemente bei gegebenen Modems

In diesem Abschnitt wird die Funktion **DimChannelElement** beschrieben. Diese bestimmt die Anzahl der Channel Elemente, für die bei einer vorgegebenen Anzahl von Modems entweder die Ziel-Blockierwahrscheinlichkeiten aller Dienste eingehalten werden oder eine weitere Erhöhung der Zahl der Channel Elemente zu keiner Reduzierung der Blockierwahrscheinlichkeiten mehr führt. Die Berechnung der Blockierwahrscheinlichkeiten wird jeweils rekursiv, aufbauend auf den schon berechneten Blockierwahrscheinlichkeiten durchgeführt. Die **FunktionDimChannelElement** sieht wie folgt aus, wobei $X$ der schon berechnete Zustandsraum ist:

$$\text{function } C = DimChannelElement(\mathcal{X}, M, C, \mathcal{S}, \mathcal{Z})$$

$$\text{Soft-Blockierwahrscheinlichkeiten: } B_{Z,S}^{Soft}[M,C] = \sum_{m=0}^{M-1}\sum_{c=0}^{C-S.C} X[m,c].P \cdot X[m,c].\beta_{Z,S}$$

$$\text{Channel Element Blockierwahrscheinlichkeit: } B_S^C[M,C] = \sum_{c=\max\{0,C-S.C+1\}}^{C}\sum_{m=0}^{M} X[m,c].P$$

$$\text{Modem Blockierwahrscheinlichkeit: } B_S^M[M,C] = \sum_{c=0}^{C-S.C} X[M,c].P$$

$$\text{Gesamtblockierwahrscheinlichkeit } B_{Z,S}[M,C] = B_{Z,S}^{Soft}[M,C] + B_S^C[M,C] + B^M[M,C]$$

$$\text{while } \exists Z.S : B_{Z,S}[M,C] \geq S.B^* \wedge B^C[M,C] > \xi_{hard}$$

$$\quad C = C+1$$

$$\quad \{\mathcal{X}[M,C], NormConst\} = StateSpace(\mathcal{X}[M,C-1], M.C-1, M, C, \mathcal{S}, \mathcal{Z})$$

$$\quad \text{forall } S \in \mathcal{S}$$

$$\qquad B_S^C[M,C] = \sum_{c=\max\{0,C-S_s.C+1\}}^{C}\sum_{m=0}^{M} X[m,c].P$$

$$\qquad B_S^M[M,C] = \frac{B_S^M[M,C-1]}{NormConst} + X[M,C-S.C].P$$

$$\qquad \text{forall } Z \in \mathcal{Z}$$

$$\qquad\quad B_{Z,S}^{Soft}[M,C] = \frac{B_{Z,S}^{Soft}[M,C-1]}{NormConst} + \sum_{m=0}^{M-1} X[m,C-S.c].P \cdot X[m,C-S.C].\beta_{Z,S}$$

$$\qquad\quad B_{Z,S}[M,C] = B_{Z,S}^{Soft}[M,C] + B_S^C[M,C] + B_S^M[M,C]$$

$$\qquad \text{end}$$

$$\quad \text{end}$$

$$\text{end}$$

$$\text{end}$$

Blockierwahrscheinlichkeiten für alle Teilräume

Die Funktion **BlockProbAll** bestimmt die Blockierwahrscheinlichkeiten für alle Dienste und Sektoren und zwar für alle Teilräume des übergebenen Zustandsraums. Wird also ein Zustandsraum für $M$ Modempaare und $C$ Channel Elemente übergeben, so werden die Blockierwahrscheinlichkeiten für alle Hardware-Konfigurationen $m, c$ mit $0 \leq m \leq M$ und $0 \leq c \leq C$ bestimmt.

```
function {B_{Z,S}} = BlockProbAll(X, M, C, Z, S)
    for m=0 to M_max
        for c=0 to C_max
```

$$N[m,c] = N[m-1,c] + N[m,c-1] - N[m-1,c-1] + X[m,c].P$$

```
            \\ N[m,c]=0, falls m < 0 oder c < 0
            forall S ∈ S
```

$$B_S^H[m,c] = \left( \sum_{c'=c-S.C+1}^{c} \sum_{m'=0}^{m-1} X[m',c'].P \right) + \sum_{c'=0}^{c} P[m,c']$$

```
            forall Z ∈ Z
```

$$B_{Z,S}^{Soft}[m,c] = B_{Z,S}^{Soft}[m-1,c] + B_{Z,S}^{Soft}[m,c-1]$$
$$- B_{Z,S}^{Soft}[m-1,c-1] + X[m,c].P \cdot X[m,c].B_{Z,S}$$

```
                \\ B^{Soft}[m,c] = 0, falls m < 0 oder c < 0
```

$$B_{Z,S}[m,c] = \frac{B_S^H[m,c] + B_{Z,S}^{Soft}[m-1,c-S.C]}{N[m,c]}$$

```
            end
        end
    end
end
```

Optimale Hardware-Konfiguration bei gegebener Blockierwahrscheinlichkeiten

Die Funktion *DimModemChannelElement* führt eine erschöpfende Suche nach der optimalen Hardware-Konfiguration durch. Dazu werden zunächst alle Zustände bestimmt, die die Vorgaben für die Blockierwahrscheinlichkeiten der einzelnen Dienste erfüllen. Danach werden für alle diese Hardware-Konfigurationen die Kosten bestimmt und die Konfiguration mit den minimalen Kosten wird ausgewählt.

$$\text{function } (M, C) = DimModemChannelElement(B_{Z,S}, M, C, \mathcal{Z}, \mathcal{S})$$
$$\quad \text{forall } Z \in \mathcal{Z}$$
$$\qquad \text{forall } S \in \mathcal{S}$$
$$\qquad\quad \text{if } B_{Z,S}[M, C] \leq S.B^*$$
$$\qquad\qquad \backslash\backslash \text{ Ziel: vorgegebene Blockierwahrscheinlichkeit}$$
$$\qquad\qquad S.B_Z = S.B^*$$
$$\qquad\quad \text{else}$$
$$\qquad\qquad \backslash\backslash \text{ Ziel: Soft-Blockierwahrscheinlichkeit}$$
$$\qquad\qquad S.B_Z = \max\{S.B^*, B_{Z,S}[M_{max}, C_{max}] \cdot S.\theta\}$$
$$\qquad\quad \text{end}$$
$$\qquad \text{end}$$
$$\quad \text{end}$$
$$Valid = \{(m, c) | \forall Z \in \mathcal{Z}, S \in \mathcal{S} : B_{Z,S}[m, c] \leq S.B_Z\}$$
$$(M, C) = \arg\left(\min_{(m,c) \in Valid} \{m \cdot K.M + c \cdot K.C\}\right)$$
$$\text{end}$$

Notation und allgemeine Funktionen

In diesem Abschnitt wird die Notation erläutert. Zusätzlich werden allgemein gebräuchliche Funktionen, die im Dimensionierungsalgorithmus genutzt werden, aufgeführt.

- $(\mu_X, \sigma_X) = Mom2ParLN(E[X], VAR[X])$
  Die Funktion *Mom2ParLN* bestimmt aus Mittelwert und Varianz einer lognormal-verteilten Zufallsvariablen deren Parameter.
- $LN_{\mu,\sigma}(X)$
  Mit $LN_{\mu,\sigma}(x)$ wird die Verteilungsfunktion einer lognormal-verteilten Zufallsvariablen mit Parametern $\mu$ und $\sigma$ bezeichnet.

Verfahren zur Bestimmung der Eingabeparameter

In diesem Abschnitt werden Verfahren angegeben, wie die Eingabeparameter für das Dimensionierungsverfahren bestimmt werden. Der Dimensionierungsalgorithmus bestimmt die Hardware-Anforderungen für eine einzeln betrachtete Basisstation. Im folgenden wird zunächst definiert, wie die Eingabeparameter für ein ganzes UMTS-Netzwerk aussehen könnten und wie daraus die entsprechenden Eingabeparameter abgeleitet werden.

Definition eines UMTS-Netzwerks

Ein UMTS-Netzwerk wird über die Menge *B* der Basisstationen, die Menge S der angebotenen Dienste und die Menge *F* der Flächenelemente definiert. Die Flächenelemente sind Quadrate, die zusammen ein Rechteck bilden, das dann der Fläche entspricht, in der Mobilteilnehmer vom UMTS-Netzwerk versorgt werden sollen. Die Basisstationen befinden sich jeweils auf Gitterpunkten. Für jede Basisstation $B \in B$ werden die folgenden Größen festgelegt:

- *B.{x, y}*: Gitter-Koordinaten
- *B.Z*: Menge der Sektoren

Jeder Sektor *Z* wird über die folgenden Größen spezifiziert:

- $Z.\phi$: Winkel der Antenne (X-Achsenrichtung entspricht 0 Grad)
- $Z.N_0$: thermisches Rauschen in dBm/Hz (-174)
- $Z.\eta_B$: Blockierschwelle für die Uplink-Last
- $Z.\eta_{th}$: Blockierschwelle für den Uplink (Lastfaktor)
- $Z.\hat{T}_{th}$: Blockierschwelle für den Downlink (Basisstationsleistung)
- $Z.E[\hat{I}_{other}]$: Mittelwert der Fremdinterferenz [mW/Hz]
- $Z.VAR[\hat{I}_{other}]$: Varianz der Fremdinterferenz [mW/Hz]
- $Z.\hat{T}_{const}$: konstante Basisstationsleistung [mW]

Weiterhin wird noch die Menge $Z^*$ aller Sektoren im Netz definiert:

$$Z^* = \bigvee_{B \in B} B.Z$$

Ein Dienst $S \in S$ wird über die folgenden Parameter festgelegt:

- $S.R$: Bit-Rate
- $S.E[\varepsilon^{up}]$: Mittelwert der $E_b/N_0$-Werte auf dem Uplink, entspricht dem Ziel-$E_b/N_0$-Wert
- $S.VAR[\varepsilon^{up}]$: Varianz der $E_b/N_0$-Werte auf dem Uplink, ist bei Annahme von perfekter Sendeleistungsregelung Null
- $S.E[\varepsilon^{down}]$: Mittelwert der $E_b/N_0$-Werte auf dem Downlink, entspricht dem Ziel-$E_b/N_0$-Wert
- $S.VAR[\varepsilon^{down}]$: Varianz der $E_b/N_0$-Werte auf dem Downlink, ist bei Annahme von perfekter Sendeleistungsregelung Null
- $S.\nu_{up}$: Uplink Aktivitätsfaktor (mittlere Aktivität)
- $S.\nu_{down}$: Downlink Aktivitätsfaktor (mittlere Aktivität)
- $S.C$: benötigte CEs (Up- und Downlink zusammen)
- $S.M = 2$: benötigte Modems (Up- und Downlink zusammen)
- $S.B^*$: vorgegebene Blockierwahrscheinlichkeit
- $S.\theta$: maximaler relativer Abstand zur reinen "Soft"-Blockierwahrscheinlichkeit

Ein Flächenelement $F \in F$ wird über die folgenden Parameter spezifiziert:

- $F.(x, y)$: Koordinaten des Mittelpunktes
- $F.a_S$: Teilnehmerdichte für Dienst $S$
- $F.N_0$: thermisches Rauschen in dBm/Hz (-174)

Zusätzlich wird das Ausbreitungsmodell über die Funktion **attenuation**(**F,Z**) bzw. **attenuation**(**Z, F**) bestimmt, die die Dämpfung von einer Mobilstation in Flächenelement $F$ zu Sektor $Z$ bzw. umgekehrt angibt. Sendet also eine Mobilstation in Flächenelement $F$ mit $S$ mW, so wird sie in Sektor $Z$ mit

$$S^R = S \; \textit{attenuation}(F,Z)$$

empfangen. Die Funktion **attenuation**$_{dB}$ liefert die entsprechenden Werte im Dezibel-Bereich. Während die Funktion **attenuation** nur den Pfadverlust umfasst, kann noch zusätzlich Shadow-Fading berücksichtigt werden. Dieses wird im Dezibel-Bereich durch eine Normal-Verteilung mit Mittelwert 0dB und eine Standardabweichung von $\sigma_{SF}$ modelliert. Die Zufallsvariable für das Shadow-Fading von Sektor $Z$ zu Flächenelement $F$ wird mit $\Theta_{Z,F}$ bezeichnet.

Weiterhin wird mit $W$ die Systembandbreite bezeichnet und mit $\alpha$ der Orthogonalitätsfaktor. Typische Werte für $\alpha$ liegen im Bereich [0; 0,4], wobei $\alpha = 0$ perfekte Orthogonalität bedeutet.

Verkehrsintensität pro Dienst und Sektor

Die Last eines Sektors *Z* wird bestimmt, indem über die zugehörige Fläche integriert wird. Im einfachsten Fall bei deterministischer Dämpfung wird jedes Flächenelement F dem Sektor zugeordnet, zu dem es die geringste Dämpfung hat. Für die Menge der Flächenelemente *Z.F* die dem Sektor *Z* zugeordnet sind, gilt also:

$$Z.\mathcal{F} = \left\{ F \in \mathcal{F} \Big| Z = \arg \left( \min_{Y \in \mathcal{Z}^*} \{attenuation(Y,F)\} \right) \right\}$$

Die Teilnehmerdichte für den Dienst S in Sektor Z ergibt sich dann als:

$$Z.a_S = \sum_{F \in Z.\mathcal{F}} F.a_s$$

Bei dieser Zuordnung der Flächenelemente zu den Basisstationen wird davon ausgegangen, dass die Dämpfung eine deterministische Funktion ist. Wird zusätzlich "Shadow-Fading" beachtet, so wird jedes Flächenelement nur mit eine bestimmten Wahrscheinlichkeit einer Basisstation zugeordnet:

$$Z.\mathcal{F} = \left\{ F \in \mathcal{F} \Big| attenuation_{dB}(Z,F) \geq \max_{Y \in \mathcal{Z}^*} \{attenuation_{dB}(Y,F)\} - PL \right\}$$

Umgekehrt wird auch mit *F.Z* die Menge aller Sektoren definiert, zu denen eine Mobilstation in Flächenelement *F* verbunden sein kann:

$$F.\mathcal{Z} = \{ Z \in \mathcal{Z}^* | F \in Z.\mathcal{F} \}$$

*PL* ist eine Konstante, die angibt, wie groß der Bereich ist, indem eine Mobilstation einer geographisch weiter entfernten Basisstation noch zugeordnet werden kann und sollte abhängig von der Standardabweichung des Shadow Fadings gewählt werden. Die Wahrscheinlichkeit, dass eine Mobilstation im Flächenelement $F \in$, *Z.F* dem Sektor *Z* zugeordnet wird, ist:

$$F.P_Z = P\left\{ attenuation_{dB}(Z,F) + \Theta_{Z,F} \geq \max_{Y \neq Z \in F.\mathcal{Z}} \{attenuation_{dB}(Y,F) + \Theta_{Y,F}\} \right\}$$

Die Verkehrsintensität für Dienst *S* in Sektor *Z* ergibt sich dann als:

$$Z.a_S = \sum_{F \in Z.\mathcal{F}} F.P_Z \cdot F.a_s$$

Momente der Dienstlastfaktoren

Der Algorithmus zur Hardware-Dimensionierung definiert die Soft-Ressourcen-Anforderung über die Momente der Uplink- bzw. Downlink-Dienstlastfaktoren. Der Uplink-Dienstlastfaktor $S.\omega$ für einen Dienst S ist definiert als:

$$S.\omega = \frac{S.R \cdot S.\hat{\varepsilon}^{up}}{W + S.R \cdot S.\hat{\varepsilon}^{up}},$$

wobei $S.\varepsilon^{up}$ eine normal-verteilte Zufallsvariable für die auf dem Uplink empfangenen $E_b/N_0$-Werte im Dezibel-Bereich ist, die durch den Mittelwert $S.E\,[\varepsilon^{up}]$ und die Varianz $S.VAR\,[\varepsilon^{up}]$ definiert ist. Die Zufallsvariable $S.\hat{\varepsilon}^{up}$ entspricht der Zufallsvariablen $S.\varepsilon^{up}$ im linearen Bereich. Das $k$-te Moment wird durch die numerische Berechnung des folgenden Integrals bestimmt:

$$E\left[S.\omega^k\right] = \int_{-\infty}^{\infty} a_{\varepsilon^{up}}(\varepsilon) \left(\frac{dB2Lin(\varepsilon) \cdot S.R}{W + dB2Lin(\varepsilon) \cdot S.R}\right)^k d\varepsilon$$

Hier ist $a_\varepsilon^{up}(\varepsilon)$ die Verteilungsdichtefunktion der Zufallsvariablen $\varepsilon^{up}$, die $N(S.E\,[\varepsilon^{up}]$, S.STD $[\varepsilon^{up}])$-verteilt ist. Mit $N(\mu, \sigma)$ wird eine normal-verteilte Zufallsvariable mit Mittelwert $\mu$ und Standardabweichung $\sigma$ bezeichnet.

Für den Downlink gilt analog, dass der Dienstlastfaktor $S.\gamma$ für den Dienst $S$ als

$$S.\gamma = \frac{S.R \cdot S.\hat{\varepsilon}^{down}}{W + \alpha \cdot S.R \cdot S.\hat{\varepsilon}^{down}},$$

definiert ist. Der Orthogonalitätsfaktor wird mit $\alpha$ bezeichnet und $S.\varepsilon^{down}$ ist eine normal-verteilte Zufallsvariable für die auf dem Downlink empfangenen $E_b/N_0$-Werte im Dezibel-Bereich. Das $k$-te Moment wird durch die numerische Berechnung des folgenden Integrals bestimmt:

$$E\left[S.\gamma^k\right] = \int_{-\infty}^{\infty} a_{\varepsilon^{down}}(\varepsilon) \left(\frac{dB2Lin(\varepsilon) \cdot S.R}{W + \alpha \cdot dB2Lin(\varepsilon) \cdot S.R}\right)^k d\varepsilon$$

Hier ist $a_\varepsilon^{down}(\varepsilon)$ die Verteilungsdichtefunktion der Zufallsvariablen $\varepsilon^{down}$, die $N(S.E\,\varepsilon^{down}, S.STD[\varepsilon^{down}]$ verteilt ist.

Momente der Fremdzelllast

Im einfachsten Fall wird davon ausgegangen, dass die Interferenz von Mobilstationen, die zu anderen Basisstationen oder zu einem anderen Sektor der gleichen Basisstation gehören, unabhängig von der Uplink-Last der betrachteten Basisstation ist. Mittelwert und Varianz der Fremdinterferenz sind in diesem Fall für jeden Sektor $Z$ gegeben. Die Eingabeparameter für den
Dimensionierungsalgorithmus, also Mittelwert und Varianz des Fremdzelllast für jeden Sektor ergeben sich als:

$$Z.E\left[\Gamma\right] = (1 - Z.\eta_{th}) \frac{Z.E\left[\ddot{I}_{other}\right]}{Z.\hat{N}_0}$$

$$Z.VAR\left[\Gamma\right] = (1 - Z.\eta_{th})^2 \frac{Z.VAR\left[\hat{I}_{other}\right]}{(Z.\hat{N}_0)^2}$$

### Momente des Positionslastfaktors

Der Positionslastfaktor ist im Gegensatz zum Dienstlastfaktor nicht vom Dienst eines Nutzers abhängig sondern von seiner Position. Der Positionslastfaktor $F.Q$ eines Flächenelements $F$ entspricht einem dienstunabhängigen Leistungsanteil, den eine Basisstation, die im Sektor $Z$ mit $F \in Z.F$ mit Grenzleistung $Z.\hat{T}_{th}$, überträgt, für dieses Flächenelement aufbringen muss. Der Positionslastfaktor ist also die Interferenz, die ein Teilnehmer im betrachteten Flächenelement sieht, umgerechnet auf die Basisstationsleistung, die benötigt wird, um ein dienst-bereinigtes Ziel-$E_b/N_0$, d.h. $E_b/N_0$ dividiert durch Processing Gain, zu erzielen. Der Positionslastfaktor $F.Q$ ist definiert als:

$$F.Q = W \cdot F.\hat{N}_0 \cdot F.\delta_Z + \sum_{Y \in Z^* \setminus Z} Y.\hat{T} \cdot F.\Delta_{Z,Y}$$

Dabei sind $F.\delta_Z$ und $F.\Delta_{Z,Y}$ Schreibweisen für:

$$F.\delta_Z = \frac{1}{attenuation\,(Z,F)}$$

$$F.\Delta_{Z,Y} = \frac{attenuation\,(Y,F)}{attenuation\,(Z.F)}$$

Weiterhin ist $Z.\hat{T}$ die Sendeleistung von Sektor $Z$, die als lognormal-verteilt angenommen wird und deren erstes und zweites Moment gegeben sind. Das erste und zweite Moment des Positionslastfaktors für das Flächenelement $F$ ergeben sich als:

$$E\left[F.Q\right] = W \cdot F.\hat{N}_0 \cdot E\left[F.\delta_Z\right] + \sum_{Y \in Z^* \setminus Z} E\left[Y.\hat{T}\right] \cdot E\left[F.\Delta_{Z,Y}\right]$$

$$
\begin{aligned}
E\left[F.Q^2\right] = {} & (W \cdot F.\hat{N}_0)^2 \cdot E\left[F.\delta_Z^2\right] \\
& + \sum_{Y \in Z^* \setminus Z} W \cdot F.\hat{N}_0 \cdot E\left[Y.\hat{T}\right] \cdot E\left[F.\delta_Z \cdot F.\Delta_{Z,Y}\right] \\
& + \sum_{\substack{Y_1, Y_2 \in Z^* \setminus Z \\ Y_1 \neq Y_2}} E\left[Y_1.\hat{T}\right] E\left[Y_2.\hat{T}\right] E\left[F.\Delta_{Z,Y_1} \cdot F.\Delta_{Z,Y_2}\right] \\
& + \sum_{Y \in Z^* \setminus Z} E\left[Y.\hat{T}^2\right] E\left[F.\Delta_{Z,Y}^2\right]
\end{aligned}
$$

Die Erwartungswerte von $E[F.\delta_Z]$ und $E[F\Delta_{Z,Y}]$ sind immer unter der Bedingung zu sehen, dass die Dämpfung von Sektor $Z$ zu Flächenelement $F$ maximal ist, d.h. die korrekte Schreibweise wäre:

$$E\left[F.\delta_Z \middle| attenuation\,(Z,F) = \max_{Y \in \mathcal{Z}^*}\left\{attenuation\,(Y,F)\right\}\right]$$

$$E\left[F.\Delta_{Z,X} \middle| attenuation\,(Z,F) = \max_{Y \in \mathcal{Z}^*}\left\{attenuation\,(Y,F)\right\}\right]$$

Die Momente des Positionslastfaktors für einen Sektor werden über die Positionslastfaktoren der einzelnen Flächenelemente bestimmt.

$$
\begin{aligned}
E[Z.Q_S] &= \frac{1}{Z.a_S}\sum_{F \in Z.\mathcal{F}} F.P_Z \cdot F.a_S \cdot E[F.Q] \\
&= \sum_{F \in Z.\mathcal{F}} F.P_Z \cdot \frac{F.a_S}{Z.a_S} \cdot \left(W \cdot F.\hat{N}_0 \cdot E[F.\delta_Z] + \sum_{Y \in \mathcal{Z}^* \setminus Z} E\left[Y.\hat{T}\right] \cdot E[F.\Delta_{Z,Y}]\right) \\
&= W \cdot \sum_{F \in Z.\mathcal{F}} F.P_Z \cdot \frac{F.a_S}{Z.a_S} \cdot F.\hat{N}_0 \cdot E[F.\delta_Z] + \sum_{Y \in \mathcal{Z}^* \setminus Z} E\left[Y.\hat{T}\right] \sum_{F \in Z.\mathcal{F}} F.P_Z \cdot \frac{F.a_S}{Z.a_S} \cdot E[F.\Delta_{Z,Y}] \\
&= W \cdot \hat{N}_0 \cdot S.E[\delta_Z] + \sum_{Y \in \mathcal{Z}^* \setminus Z} E\left[Y.\hat{T}\right] \cdot S.E[\Delta_{Z,Y}]
\end{aligned}
$$

Hier wird angenommen, dass das thermische Rauschen für alle Flächenelemente identisch ist, d.h. $\forall F \in F$: $\hat{N}_0 = F.N_0$

$$
\begin{aligned}
E\left[Z.Q_S^2\right] &= \frac{1}{Z.a_S}\sum_{F \in Z.\mathcal{F}} F.P_Z \cdot F.a_S \cdot E\left[F.Q^2\right] \\
&= (W \cdot \hat{N}_0)^2 \cdot S.E\left[\hat{\delta}_Z^2\right] \\
&\quad + 2 \cdot W \cdot \hat{N}_0 \cdot \sum_{Y \in \mathcal{Z}^* \setminus Z} E\left[Y.\hat{T}\right] \cdot S.E[\Delta_{Z,Y}] \\
&\quad + \sum_{\substack{Y_1, Y_2 \in \mathcal{Z}^* \setminus Z \\ Y_1 \neq Y_2}} E\left[Y_1.\hat{T}\right] E\left[Y_2.\hat{T}\right] S.E[\Delta_{Z,Y_1} \cdot \Delta_{Z,Y_2}] \\
&\quad + \sum_{Y \in \mathcal{Z}^* \setminus Z} E\left[Y.\hat{T}^2\right] S.E\left[\Delta_{Z,Y}^2\right]
\end{aligned}
$$

Zusätzlich wird noch das Produkt der Positionslastfaktoren zweier Nutzer mit Dienst $S_1$ und $S_2$ benötigt. Es wird angenommen, dass sich die beiden Teilnehmer nicht auf dem gleichen Flächenelement befinden.

$$E[Z.Q_{S_1}Q_{S_2}] = \frac{1}{Z.a_S^2} \sum_{F_1 \in Z.\mathcal{F}} \sum_{F_2 \in Z.\mathcal{F}} F_1.P_Z \cdot F_1.a_S \cdot E[F_1.Q] \, F_2.P_Z \cdot F_2.a_S \cdot E[F_2.Q]$$

$$= (W \cdot \hat{N}_0)^2 \cdot S_1.E[\delta_Z] \cdot S_2.E[\delta_Z]$$

$$+ W \cdot \hat{N}_0 \cdot \sum_{Y \in \mathcal{Z}^* \backslash Z} E\left[Y.\hat{T}\right] \cdot \left(S_1.E[\Delta_{Z,Y}] + S_2.E[\Delta_{Z,Y}]\right)$$

$$+ \sum_{\substack{Y_1,Y_2 \in \mathcal{Z}^* \backslash Z \\ Y_1 \neq Y_2}} E\left[Y_1.\hat{T}\right] E\left[Y_2.\hat{T}\right] \left(S_1.E[\Delta_{Z,Y_1}] \cdot S_2.E[\Delta_{Z,Y_2}] + S_2.E[\Delta_{Z,Y_1}] \cdot S_1.E[\Delta_{Z,Y_2}]\right)$$

$$+ \sum_{Y \in \mathcal{Z}^* \backslash Z} E\left[Y.\hat{T}^2\right] \cdot S_1.E[\Delta_{Z,Y}] \cdot S_2.E[\Delta_{Z,Y}]$$

## Soft Handover

Um Soft Handover Verbindungen mit einzubeziehen, werden zusätzliche Dienste definiert, deren Dienstlastfaktoren 0 sind, die also nicht zur Soft-Kapazität beitragen, denen aber dennoch Hardware-Anforderungen zugewiesen werden.

Zu jedem Dienst $S \in S$ wird also ein weiterer Dienst $S_{soft}$ definiert mit:

- $S_{soft}.C = S.\,C$
- $S_{soft}.M = S.\,M$
- $S_{soft}.E[\omega] = 0$
- $S_{soft}.E[\gamma] = 0$

Zur Bestimmung der Verkehrsintensität eines Soft-Dienstes werden zunächst die Flächenelemente bestimmt, die für Soft Handover in Frage kommen. Ohne Beachtung von Lognormal Shadowing sind dies:

$$Z.\mathcal{F}_{soft} = \left\{ F \in \mathcal{F} \quad \middle| \quad \max_{Y \in \mathcal{Z}^*} \left\{attenuation_{dB}(Y,F)\right\} \right.$$
$$> attenuation_{dB}(Z,F)$$
$$\left. \geq \max_{Y \in \mathcal{Z}^*} \left\{attenuation_{dB}(Y,F) - RepRange\right\} \right\},$$

wobei ***RepRange*** für die Reporting Range des Systems steht.

Die Verkehrsintensität für den Soft-Dienst ergibt sich dann durch Aufsummieren der Verkehrsintensitäten dieser Flächenelemente:

$$Z.a_{S_{soft}} = \sum_{F \in Z.\mathcal{F}_{soft}} F.a_S$$

Wird Lognormal-Shadowing mit einbezogen, so vergrößert sich die Anzahl der in Frage kommenden Flächenelemente. Diese sind dann allerdings nur noch mit einer bestimmten Wahrscheinlichkeit im Soft Handover Bereich:

$$Z.\mathcal{F}_{soft} = \left\{ F \in \mathcal{F} \quad \middle| \quad \max_{Y \in Z^*} \{ attenuation_{dB}(Y,F) + PL \} \right.$$
$$> attenuation_{dB}(Z,F)$$
$$\left. \geq \max_{Y \in Z^*} \{ attenuation_{dB}(Y,F) - RepRange - PL \} \right\}$$

Die Wahrscheinlichkeit, dass ein Flächenelement *F* im Soft Handover Bereich von *Z* ist, ergibt sich aus:

$$F.P_Z^{soft} = P \left\{ \max_{Y \neq Z \in F.\mathcal{Z}} \{ attenuation_{dB}(Y,F) + \Theta_{Y,F} \} \right.$$
$$> attenuation_{dB}(Z,F) + \Theta_{Z,F}$$
$$\left. \geq \max_{Y \neq Z \in F.\mathcal{Z}} \{ attenuation_{dB}(Y,F) + \Theta_{Y,F} - RepRange \} \right\}$$

Die Verkehrsintensität für den Soft-Dienst ergibt sich dann durch Aufsummieren der Verkehrsintensitäten dieser Flächenelemente:

$$Z.a_{S_{soft}} := \sum_{F \in Z.\mathcal{F}_{soft}} F.P_Z^{soft} \cdot F.a_S$$

**Patentansprüche**

1. Verfahren zur simultanen Dimensionierung von verschiedenen Hardware-Komponenten an einer Basisstation eines CDMA-Mobilkommunikationsnetzes, wobei die Hardware-Komponenten Modems und Channel Elemente umfassen, wobei für jede Basisstation eine minimale Anzahl von Hardware-Komponenten bestimmt wird, **gekennzeichnet durch** die Schritte:

   - Dimensionieren der Modems und Channel Elemente getrennt voneinander, wobei von einer festen unteren Schranke für die Anzahl der benötigten Modems $M_{min}$ und Channel Elemente $C_{min}$ ausgegangen wird,
   - Berechnen der Blockierwahrscheinlichkeiten für diese initiale Konfiguration von $C_{min}$ und $M_{min}$ , wobei Modems und Channel Elemente gemeinsam betrachtet werden ,
   - dass im Falle eine vorgegebene Blockierwahrscheinlichkeiten für alle Sektoren der Basisstation erfüllt ist, das Dimensionierungsverfahren abgeschlossen ist, oder
   - dass andernfalls unterschieden werden muss, ob die Soft-Kapazität, d.h. die Netzkapazität unter Berücksichtigung von netzeigenen Interferenzen, bereits für alle Sektoren erreicht ist,

     -- wobei im positiven Fall die Hardware-Komponenten soweit reduziert werden, dass die Blockierwahrscheinlichkeiten höchstens um einen Wert θ über den reinen Soft-Blockierwahrscheinlichkeiten, d.h. die Blockierwahrscheinlichkeiten bei uneingeschränkten Hardware-Ressourcen liegen, und
     -- dass andernfalls die Zahl der Hardware-Komponenten weiter erhöht wird, wobei die Zahl der Modems bei konstanten $C_{min}$ Channel Elementen so weit erhöht wird, bis keine Blockierung durch Modems mehr auftritt, und ebenso die Zahl der Channel Elemente bei $M_{min}$ Modems erhöht wird, wobei die Erhöhung der Modems und Channel Elemente solange durchgeführt wird, bis entweder die vorgegebenen Blockierwahrscheinlichkeiten erreicht sind oder aber **durch** zusätzliche Hardware keine Reduzierung der Blockierwahrscheinlichkeiten mehr erreicht wird, da die Soft-Kapazität in den entsprechenden Sektoren erreicht ist, wobei die daraus resultierenden $C_{max}$ und $M_{max}$ die Obergrenze für die benötigten Modems darstellen.

**2.** Verfahren nach Anspruch 1, **dadurch gekennzeichnet, dass** die Blockierwahrscheinlichkeiten für Konfigurationen mit weniger als $M_{max}$ *Modems und* $C_{max}$ Channel Elementen bestimmt werden, und unter den Konfigurationen, die die vorgegebenen Blockierwahrscheinlichkeiten einhalten, diejenige mit den geringsten Kosten ausgewählt wird.

**3.** Verfahren nach einem der vorhergehenden Ansprüche, **dadurch gekennzeichnet, dass** die Anzahl der Hardware-Komponenten erhöht wird, falls es mindestens einen Sektor gibt, in dem die vorgegebenen Blockierwahrscheinlichkeiten für mindestens einen Dienst noch nicht eingehalten werden gleichzeitig aber auch die Soft-Kapazität dieses Sektors noch nicht vollständig erschöpft ist.

**4.** Verfahren nach einem der vorhergehenden Ansprüche, **dadurch gekennzeichnet, dass** die Mindestanzahl $M_{min}$ von Modems **dadurch** bestimmt wird, indem die zunächst nur die Anzahl der benötigten Modems zum Erreichen einer vorgegebenen Blockierwahrscheinlichkeit bestimmt wird.

**5.** Verfahren nach einem der vorhergehenden Ansprüche, **dadurch gekennzeichnet, dass** die Mindestanzahl $C_{min}$ von Channel Elementen **dadurch** bestimmt wird, indem zunächst nur die Anzahl der benötigten Channel Elemente zum Erreichen einer vorgegebenen Blockierwahrscheinlichkeit bestimmt wird.

**Claims**

**1.** Method for the simultaneous dimensioning of different hardware components at a base station of a CDMA mobile communication network, the hardware components including modems and channel elements, a minimum number of hardware components being determined for each base station, **characterised by** the steps of:

- dimensioning the modems and channel elements separately from each other, starting from a fixed lower limit for the number of modems $M_{min}$ and channel elements $C_{min}$ needed,
- calculating the blocking probabilities for this initial configuration of $C_{min}$ and $M_{min}$, modems and channel elements being viewed together,
- that in the event that a predetermined blocking probability is fulfilled for all sectors of the base station, the dimensioning process is complete, or
- that otherwise it must be distinguished whether the soft capacity, i.e. the network capacity taking into account the network's own interferences, is already reached for all sectors,
- wherein in the affirmative the hardware components are reduced to such an extent that the blocking probabilities are at the most a value $\theta$ above the pure soft blocking probabilities, i.e. the blocking probabilities in the case of unrestricted hardware resources, and

- that otherwise the number of hardware components is further increased, the number of modems in the case of constant $C_{min}$ channel elements being increased until no more blocking by modems occurs, and similarly the number of channel elements in the case of $M_{min}$ modems being increased, the increase in modems and channel elements being carried out until either the predetermined blocking probabilities are reached or no more reduction of the blocking probabilities is reached due to additional hardware, as the soft capacity in the corresponding sectors is reached, the resulting $C_{max}$ and $M_{max}$ being the upper limit for the modems needed.

**2.** Method according to claim 1, **characterised in that** the blocking probabilities are determined for configurations with fewer than $M_{max}$ modems and $C_{max}$ channel elements, and from among the configurations which observe the predetermined blocking probabilities, the one with the lowest costs is selected.

**3.** Method according to one of the preceding claims, **characterised in that** the number of hardware components is increased in the event that there is at least one sector in which the predetermined blocking probabilities are not yet observed for at least one service, but at the same time the soft capacity of this sector is not yet completely depleted.

**4.** Method according to one of the preceding claims, **characterised in that** the minimum number $M_{min}$ of modems is determined by initially determining only the number of modems needed to reach a predetermined blocking probability.

**5.** Method according to one of the preceding claims, **characterised in that** the minimum number $C_{min}$ of channel elements is determined by initially determining only the number of channel elements needed to reach a predetermined blocking probability.

**Revendications**

1. Procédé pour dimensionner simultanément différents composants matériels au niveau d'une station de base d'un réseau de communication mobile CDMA, selon lequel les composants matériels comprennent des modems et des éléments de canaux, et pour chaque station de base est défini un nombre minimal de composants matériels, **caractérisé par** les étapes qui consistent à :

   - dimensionner séparément les modems et les éléments de canaux, étant précisé qu'on part d'une limite inférieure fixe pour le nombre de modems $M_{min}$ et d'éléments de canaux $C_{min}$ nécessaires,
   - calculer les probabilités de blocage pour cette configuration initiale de $C_{min}$ et $M_{min}$, les modems et les éléments de canaux étant considérés ensemble,
   - au cas où une probabilité de blocage prédéfinie est satisfaite pour tous les secteurs de la station de base, le procédé de dimensionnement est terminé, ou
   - dans le cas contraire, il faut voir si la capacité logicielle, c'est-à-dire la capacité du réseau compte tenu d'interférences propres au réseau, est déjà atteinte pour tous les secteurs,

      - étant précisé que dans le cas positif, les composants matériels sont réduits jusqu'à ce que les probabilités de blocage soient supérieures d'une valeur θ, au maximum, aux probabilités de blocage purement logiciel, c'est-à-dire les probabilité de blocage en présence de ressources matérielles illimitées, et
      - que dans le cas contraire, le nombre de composants matériels est encore augmenté,
      - le nombre de modems en présence d'éléments de canaux $C_{min}$ constants étant augmenté jusqu'à ce qu'il n'y ait plus de blocage par les modems, et de même le nombre d'éléments de canaux en présence de $M_{min}$ modems est augmenté, l'augmentation des modems et des éléments de canaux étant effectuée jusqu'à ce que les probabilités de blocage prédéfinies soient atteintes ou que grâce à un matériel supplémentaire on n'obtienne plus de réduction des probabilités de blocage, étant donné que la capacité logicielle est atteinte dans les secteurs correspondants, les $C_{max}$ et $M_{max}$ qui en résultent représentant la limite supérieure pour les modems nécessaires.

2. Procédé selon la revendication 1, **caractérisé en ce que** les probabilités de blocage pour des configurations avec moins de $M_{max}$ modems et $C_{max}$ éléments de canaux sont définies, et parmi les configurations qui respectent les probabilités de blocage prédéfinies celles qui présentent les coûts les plus faibles sont choisies.

3. Procédé selon l'une des revendications précédentes, **caractérisé en ce que** le nombre de composants matériels est augmenté au cas où il y a au moins un secteur dans lequel les probabilités de blocage prédéfinies ne sont pas encore respectées par au moins un service, mais où en même temps la capacité logicielle de ce secteur n'est pas encore complètement épuisée.

4. Procédé selon l'une des revendications précédentes, **caractérisé en ce qu'**on définit le nombre minimal $M_{min}$ de modems en ne définissant tout d'abord que le nombre de modems nécessaires pour atteindre une probabilité de blocage prédéfinie.

5. Procédé selon l'une des revendications précédentes, **caractérisé en ce qu'**on définit le nombre minimal $C_{min}$ d'éléments de canaux en ne définissant tout d'abord que le nombre d'éléments de canaux nécessaires pour atteindre une probabilité de blocage prédéfinie.

EP 1 779 686 B1

Fig. 1

30

# EP 1 779 686 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004068956 A1